# EUROPÄISCHE PATENTANMELDUNG

(11) **EP 4 659 567 A1**
(43) Veröffentlichungstag der Anmeldung: **10.12.2025**
(21) Anmeldenummer: 25179268.5
(22) Anmeldetag: 28.05.2025
(51) Int. Cl.: A01G 17/02

(54) **VORRICHTUNG ZUR BEARBEITUNG VON PFLANZEN**

(30) Priorität: 04.06.2024 DE 102024115560
(71) Anmelder: ERO GmbH, 55469 Simmern (DE)
(72) Erfinder: KRAFF, Benedikt, 54518 SEHLEM (DE); PETRY, Willi, 56290 UHLER (DE)
(74) Vertreter: Ipsilon

(57) **Zusammenfassung**

Eine Pflanzenbearbeitungsvorrichtung (100) weist Gebläse (110) und eine eine oder mehrere fluidisch mit dem Gebläse (110) verbundene Düsen (210) umfassende Düsenanordnung (200) auf, welche an einer mit einem landwirtschaftlichen Fahrzeug (10) verbindbaren Halterung (50) so angeordnet ist, dass ein von der Düsenanordnung (200) ausgehender Luftstrom in Bodennähe mit einer überwiegenden, vertikalen Komponente austritt. Der von der Düsenanordnung (200) austretende Luftstrom erstreckt sich in einer ersten Richtung (R1) über eine erste Distanz (D1) und in einer zweiten, orthogonal zu der ersten Richtung (R1) verlaufenden zweiten Richtung (R2) über eine zweite Distanz (D2). Die erste Distanz (D1) ist nennenswert größer als die zweite Distanz (D2).

## Beschreibung

### FELD DER ERFINDUNG

Die vorliegende Erfindung betrifft eine Vorrichtung zur Bearbeitung von Pflanzen, insbesondere fruchttragenden Pflanzen.

### HINTERGRUND

Insbesondere für die Kultivierung und Bearbeitung von Pflanzen in Reihenkulturen, wie etwa beim Weinanbau, beim Obst-, Hopfen- und Gemüseanbau, werden zur effizienten Bewirtschaftung Pflanzenbearbeitungseinrichtungen verwendet, die üblicherweise an einem landwirtschaftlichen Fahrzeug befestigt sind. Solche Pflanzenbearbeitungseinrichtungen umfassen zum Beispiel Laubschneider, Spritz- oder Sprühgeräte und Entlaubungsgeräte, welche oft als Front-, Heck- oder Seitenanbaugeräte für Traktoren ausgebildet sind, die üblicherweise in einem Rahmen oder in einer Halterung des Anbaugerätes angeordnet sind und in Bezug auf die zu bearbeitende Pflanze in ihrer Zustellung mit verschiedenen Aktoren variiert werden können.

Bei einigen Pflanzen müssen in einer bestimmten Wachstumsphase Triebe aufgerichtet und ggf. an einer Stützstruktur befestigt werden. Bei anderen Pflanzen müssen außen liegende Pflanzenteile aufgerichtet werden, um dahinter liegende Pflanzenteile bearbeiten zu können, und bei wiederum anderen Pflanzen müssen Pflanzenteile zur Ernte aufgerichtet werden. Das Aufrichten von Pflanzenteilen für unterschiedlichste Zwecke und Tätigkeiten ist also ein in vielen Aspekten der Bewirtschaftung von Pflanzen genutzter Vorgang.

Während ein manuelles Aufrichten von Pflanzenteilen im Einzelfall bzw. bei einer kleineren Anzahl von Pflanzen wirtschaftlich sinnvoll sein kann, werden im größeren Maßstab maschinelle Vorrichtungen zum Aufrichten von Pflanzenteilen genutzt, nicht zuletzt, um Arbeitskräften diese körperlich stark belastende Tätigkeit zu ersparen.

Herkömmliche Maschinen nutzen zum Aufrichten von Pflanzenteilen an einem landwirtschaftlichen Fahrzeug befestigte schräg nach oben verlaufende Kufen, deren eines Ende in Bodennähe angeordnet ist. Bei der Vorbeifahrt des LWFs an einer Pflanze werden am Boden liegende Pflanzenteile, bspw. hängende oder liegende Triebe, angehoben und bei der weiteren Vorbeifahrt angehoben. Bei geeigneter Ausrichtung der Kufen kann erreicht werden, dass die Pflanzenteile im Wesentlichen vertikal stehen, was für einige Bearbeitungsarten erforderlich sein kann. Im Weinbau müssen bspw. die jungen Triebe der Reben in einer bestimmten Wachstumsphase an Haltedrähten oder -schnüren befestigt werden, welche weitestgehend parallel zum Untergrund entlang der jeweiligen Rebenreihe verlaufen. Dieser auch als "Laubheften" bezeichnete Vorgang vereinfacht es der Pflanze, entlang der Rebenreihe zu wachsen, was grundsätzlich eine vereinfachte Bearbeitung und Ernte erlaubt, und stützt außerdem die Pflanze gegen Windlast und dergleichen ab.

Anstelle der Kufen können auch schräg gestellte umlaufende Bänder, ähnlich einem Förderband oder Bandschleifer, verwendet werden, deren der Pflanze zugewandte Bandseite von unten nach oben läuft und die Pflanzenteile durch Reibung anhebt und nach und nach aufrichtet. Eine solche Vorrichtung ist bspw. aus der WO 2022/156861 A1 oder der DE 297 07 421 U1 bekannt.

Es können auch schräg stehende rotierende Schnecken, ähnlich einer archimedischen Schraube, zum Einsatz kommen. Hier werden die Pflanzenteile von spiralförmig verlaufenden Strukturen mitgenommen und durch die Drehung nach oben bewegt, so dass das jeweils erfasste Pflanzenteil aufgerichtet wird. Eine solche Vorrichtung ist bspw. aus der DE 297 07 421 U1 bekannt.

Die Geschwindigkeit der umlaufenden Bänder bzw. die Drehgeschwindigkeit der Schnecke muss an die Geschwindigkeit der Vorbeifahrt an der Pflanze angepasst sein, um zu einem geeigneten Zeitpunkt die Pflanzenteile wunschgemäß aufgerichtet zu haben. Bei einer unzureichenden Abstimmung der beiden Parameter aufeinander können Pflanzenteile in Fahrtrichtung gebogen werden, so dass das erwünschte Ergebnis nicht erzielt wird.

Allen diesen bekannten Vorrichtungen ist zudem gemein, dass die Pflanze mechanisch kontaktiert wird, was bei empfindlichen Pflanzen zu Beschädigungen führen kann, die sich später auf die Gesundheit der Pflanze und den Ertrag auswirken kann.

Es ist daher wünschenswert, eine Vorrichtung zum Aufrichten von Pflanzenteilen zu erhalten, welche keinen mechanischen Kontakt mit der Pflanze erfordert oder diesen zumindest verringert, und außerdem eine in Fahrtrichtung eines die Vorrichtung tragenden Fahrzeugs wirkende Kraft eliminiert oder zumindest stark verringert.

### BESCHREIBUNG DER ERFINDUNG

Diese Aufgabe wird durch die in Anspruch 1 angegebene Pflanzenbearbeitungsvorrichtung gelöst. Vorteilhafte Weiterentwicklungen und Ausgestaltungen der Erfindung sind in den abhängigen Ansprüchen angegeben. Ein landwirtschaftliches Fahrzeug mit einer erfindungsgemäßen Pflanzenbearbeitungsvorrichtung ist in Anspruch 8 angegeben.

Eine Pflanzenbearbeitungsvorrichtung gemäß einem ersten Aspekt der Erfindung umfasst ein Gebläse und eine ein oder mehrere Düsen aufweisende Düsenanordnung. Das Gebläse und die Düsenanordnung sind fluidisch miteinander verbunden, so dass ein von dem Gebläse abgegebener Luftstrom über die Düsen austritt. Die Düsenanordnung ist an einer mit einem landwirtschaftlichen Fahrzeug verbindbaren Halterung so angeordnet, dass der aus der oder den Düsen austretende Luftstrom in Bodennähe und/oder an einer der Pflanzenbearbeitungsvorrichtung (100) zugeordneten weiteren Bearbeitungsvorrichtung mit einer überwiegenden vertikalen Komponente austritt. Die überwiegend vertikale Komponente beträgt vorzugsweise mindestens 50%, d.h., mehr als die Hälfte des Luftstroms verläuft im Wesentlichen vertikal und/oder der Vektor des Luftstroms verläuft in einem Winkel von weniger als 45% zur Vertikalen. Bei einer Düsenanordnung, die den oder die Luftströme nicht in einer geraden Linie abgibt, bspw. in einer geknickten oder bogenförmigen Linie, bedeutet eine überwiegend vertikale Komponente ebenfalls, dass mehr als die Hälfte des Luftstroms im Wesentlichen vertikal verläuft. Bezogen auf den in diesem Fall fehlenden einzigen Vektor des Luftstroms bedeutet eine überwiegend vertikale Komponente, dass die überwiegende Zahl der Vektoren des Luftstroms oder der Luftströme in einem Winkel von weniger als 45% zur Vertikalen verläuft. Der von der Düsenanordnung austretende Luftstrom bzw. die aus mehreren Düsen der Düsenanordnung austretenden Luftströme erstreckt bzw. erstrecken sich in einer ersten Richtung über eine erste Distanz und in einer orthogonal zu der ersten Richtung verlaufenden zweiten Richtung über eine zweite Distanz. Die erste Distanz ist nennenswert größer als die zweite Distanz, insbesondere in einem Verhältnis größer als 2 zu 1.

Bei einer oder mehreren Ausgestaltungen ist die Düsenanordnung mittels einer gelenkigen Verbindung mit der Halterung verbunden. Die Düsenanordnung kann bei dieser Ausgestaltung durch die Wirkung der Schwerkraft oder durch einen auf die gelenkige Verbindung wirkenden Aktuator so ausgerichtet werden, dass der Luftstrom stets mit der der überwiegend vertikalen Komponente austritt. So kann bspw. bei einer linearen Gesamtanordnung mehrerer Düsen eine Neigung der linearen Gesamtanordnung an sich erfolgen, und die einzelnen Düsen innerhalb der Gesamtanordnung werden entsprechend entgegen der Neigung der Gesamtanordnung geneigt, so dass aus ihnen Luft im Wesentlichen vertikal austritt. Auf diese Weise kann ein vom Boden aus ansteigender Luftstrom einer bestimmten Ausdehnung in der ersten Richtung erzeugt werden, der die Aufrichtung der Pflanzenteile entlang der geneigten Gesamtanordnung bewirkt. Dabei können die Luftströme der einzelnen Düsen sowie deren Fokussierung überall weitgehend konstant bleiben, was das Design der Düsenanordnung und deren Ansteuerung vereinfacht. Anstelle einer Reihe einzelner Düsen können auch in der Gesamtanordnung beweglich angeordnete Leitbleche vorgesehen sein, welche ebenfalls die vertikale Ausrichtung des Gesamt-Luftstroms bewirken.

Bei einer oder mehreren Ausgestaltungen weist der Luftaustritt der Düsenanordnung einen bogenförmigen, vom bodenseitigen Ende der Düsenanordnung ansteigenden Verlauf auf. Bei dieser Ausgestaltung kann ebenfalls durch die jeweilige Ausrichtung mehrerer in der Düsenanordnung angeordneter einzelner Düsen oder beweglich aufgehängter Leitbleche der Austritt eines Luftstroms mit einer überwiegenden, vertikalen Komponente erreicht werden.

Bei einer oder mehreren Ausgestaltungen sind sowohl die Düsenanordnung als auch das Gebläse an der mit dem landwirtschaftlichen Fahrzeug verbindbaren Halterung angeordnet, ggf. in einem gemeinsamen Gehäuse. Hierdurch kann ggf. die Luftführung zwischen Gebläse und Düsenanordnung vereinfacht werden.

Bei einer oder mehreren Ausgestaltungen umfasst die Pflanzenbearbeitungsvorrichtung neben der Düsenanordnung eine weitere Vorrichtung zum Anheben bzw. Aufrichten von Pflanzenteilen mittels direktem mechanischen Kontakt zwischen der weiteren Vorrichtung und der Pflanze, z.B. eine Vorrichtung konventioneller Art, wie sie in der Beschreibungseinleitung beschrieben ist. Diese Ausgestaltung kann ggf. bei sehr tief hängenden Pflanzenteilen vorteilhaft sein, um auch diesen in den Luftstrom hineinzubewegen. Der mechanische Kontakt zwischen Pflanze und Vorrichtung wird dabei zwar nicht vollständig vermieden, jedoch auf ein Minimum beschränkt.

Bei einer oder mehreren Ausgestaltungen umfasst die Pflanzenbearbeitungsvorrichtung außerdem eine Vorrichtung zur Anbindung bzw. Verbindung von durch den Luftstrom aufgerichteten Pflanzenteilen mit einer den Pflanzen zugeordneten Tragstruktur, bspw. einem Spalier oder einem Spanndraht bzw. -seil.

Bei einer oder mehreren Ausgestaltungen umfasst die Pflanzenbearbeitungsvorrichtung außerdem eine Vorrichtung zur Entfernung von Feuchtigkeit, Laub und/oder anderen Pflanzenteilen, bspw. ein Gebläse, einen Druckluftentlauber, rotierende Schneidmesser oder dergleichen.

Ein landwirtschaftliches Fahrzeug gemäß einem zweiten Aspekt der Erfindung umfasst ein Fahrgestell sowie eine Pflanzenbearbeitungsvorrichtung gemäß einer oder mehreren Ausgestaltungen des ersten Aspekts der Erfindung. Das Fahrgestell kann selbstfahrend oder von einer Zugmaschine gezogen sein. In diesem Kontext ist selbstfahrend vor allem als mit einem eigenen Antrieb versehen zu verstehen, nicht notwendigerweise im Sinne von autonom fahrend.

Die erfindungsgemäße Pflanzenbearbeitungsvorrichtung kommt ohne mechanischen Kontakt zwischen der Pflanzenbearbeitungsvorrichtung und der Pflanze aus, oder verringert die Kontaktfläche und/oder die Kontaktdauer eines mechanischen Kontakts zumindest erheblich gegenüber konventionellen Vorrichtungen. Dadurch können Beschädigungen der Pflanze vermieden oder zumindest verringert werden. Die erfindungsgemäße Pflanzenbearbeitungsvorrichtung kann als Bearbeitungs-Vorstufe für vielfältige weitere an den Pflanzen vorzunehmende Bearbeitungsschritte angewendet werden. So kann nach dem Aufrichten von Pflanzenteilen, bspw. Trieben oder Ästen, die in der Beschreibungseinleitung beispielhaft genannte Anbindung oder Verbindung der aufgerichteten Triebe oder Äste an eine Tragstruktur, zum, Beispiel horizontal verlaufende Schnüre oder Drähte, erfolgen. Eine Ausgestaltung der erfindungsgemäßen Pflanzenbearbeitungsvorrichtung umfasst dementsprechend außerdem eine Vorrichtung zur Anbindung bzw. Verbindung von durch den Luftstrom aufgerichteten Pflanzenteilen mit einer solchen Tragstruktur.

Ein anderer weiterer Bearbeitungsschritt kann das Entfernen von Feuchtigkeit, Laub und/oder Pflanzenteilen nach dem Anheben bzw. Aufrichten der Pflanzenteile durch den Luftstrom umfassen. So können bspw. im Weinbau herabhängende Triebe aufgerichtet werden und dann in Höhe der Trauben Feuchtigkeit oder Laub entfernt werden, zum Beispiel mittels eines weiteren Gebläses. Anschließend können die zuvor angehobenen Triebe wieder herabgelassen werden, so dass eine zu starke direkte Sonneneinstrahlung auf die Trauben, die zu Sonnenbrand und dadurch zu verringerter Qualität führt, vermieden werden kann.

Der oder die auf das Anheben oder Aufrichten der Pflanzenteile nachfolgenden Bearbeitungsschritte können auch manuell ausgeführt werden. In diesem Fall wird lediglich das körperlich anstrengende Anheben der Pflanzenteile maschinell erledigt.

### KURZE BESCHREIBUNG DER ZEICHNUNG

Im Folgenden wird die Erfindung mit Bezug auf die Zeichnung beschreiben. In der Zeichnung zeigt
- Fig. 1: eine Seitenansicht eines landwirtschaftlichen Fahrzeugs mit einer an einer Halterung angeordneten exemplarischen Ausgestaltung der erfindungsgemäßen Pflanzenbearbeitungsvorrichtung,
- Fig. 2: eine Frontalansicht des landwirtschaftlichen Fahrzeugs mit der exemplarischen Ausgestaltung der erfindungsgemäßen Pflanzenbearbeitungsvorrichtung aus Figur 1,
- Fig. 3: eine schräge Draufsicht auf das landwirtschaftliche Fahrzeug mit der exemplarischen Ausgestaltung der erfindungsgemäßen Pflanzenbearbeitungsvorrichtung aus Figur 1,
- Fig. 4: eine Draufsicht von schräg vorne auf eine Halterung mit daran angeordneter exemplarischer Ausgestaltung der erfindungsgemäßen Pflanzenbearbeitungsvorrichtung,
- Fig. 5: eine Draufsicht von schräg hinten auf die Halterung mit daran angeordneter exemplarischer Ausgestaltung der erfindungsgemäßen Pflanzenbearbeitungsvorrichtung aus Figur 4,
- Fig. 6: eine Vorderansicht der Halterung mit daran angeordneter exemplarischer Ausgestaltung der erfindungsgemäßen Pflanzenbearbeitungsvorrichtung aus Figur 4,
- Fig. 7: eine Seitenansicht der Halterung mit daran angeordneter exemplarischer Ausgestaltung der erfindungsgemäßen Pflanzenbearbeitungsvorrichtung aus Figur 4,
- Fig. 8: eine Draufsicht auf die Halterung mit daran angeordneter exemplarischer Ausgestaltung der erfindungsgemäßen Pflanzenbearbeitungsvorrichtung aus Figur 4 sowie einer Heftvorrichtung,
- Fig. 9: eine erste Seitenansicht einer beispielhaften Düsenanordnung einer erfindungsgemäßen Pflanzenbearbeitungsvorrichtung,
- Fig. 10: eine Draufsicht auf eine beispielhafte erfindungsgemäße Düsenanordnung einer Pflanzenbearbeitungsvorrichtung,
- Fig. 11: eine zweite Seitenansicht einer beispielhaften erfindungsgemäßen Düsenanordnung einer Pflanzenbearbeitungsvorrichtung,
- Fig. 12: eine isometrische Ansicht einer beispielhaften erfindungsgemäßen Düsenanordnung einer Pflanzenbearbeitungsvorrichtung.

In den Figuren können ähnliche oder identische Elemente mit denselben Bezugszeichen versehen sein.

### BESCHREIBUNG VON AUSFÜHRUNGSBEISPIELEN

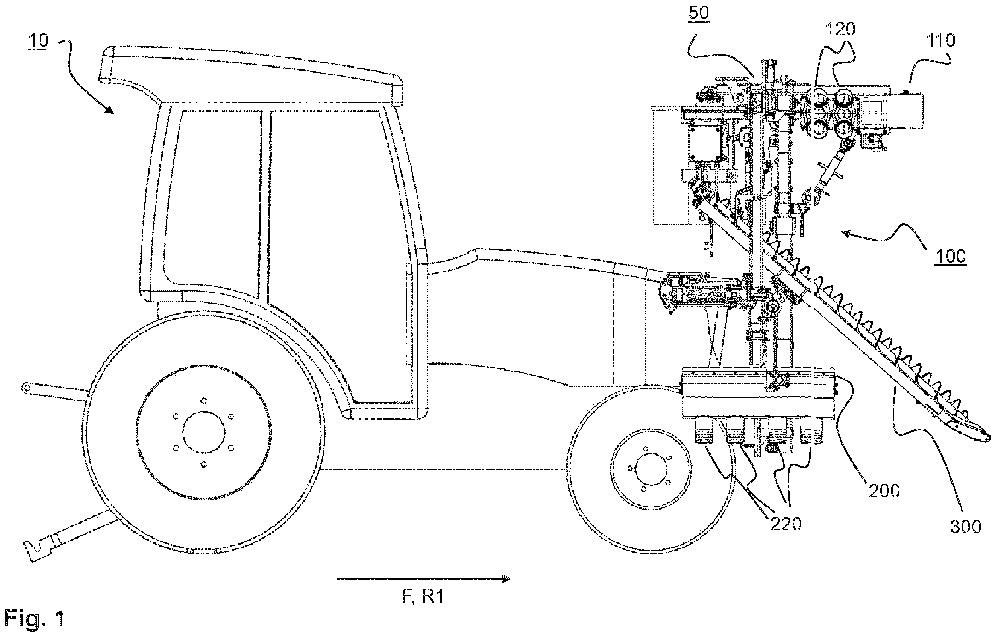

Figur 1 zeigt eine Seitenansicht eines landwirtschaftlichen Fahrzeugs 10 mit einer an einer Halterung 50 angeordneten exemplarischen Ausgestaltung einer erfindungsgemäßen Pflanzenbearbeitungsvorrichtung 100 mit einer Düsenanordnung 200 und einem Gebläse 110. Die fluidische Verbindung zwischen dem Gebläse 110 und der Düsenanordnung 200 erfolgt mittels nicht in der Figur dargestellten Luftschläuchen, welche an jeweilige Anschlussstutzen 120, 220 des Gebläses 110 bzw. der Düsenanordnung 200 angeschlossen sind. In der Figur ist außerdem eine weitere Vorrichtung 300 zum Anheben bzw. Aufrichten von Pflanzenteilen mittels direktem mechanischen Kontakt zwischen der weiteren Vorrichtung und der Pflanze, hier in Form zweier rotierender archimedischer Schrauben. Der mit F bezeichnete Pfeil zeigt die Fahrtrichtung während des Betriebs an.

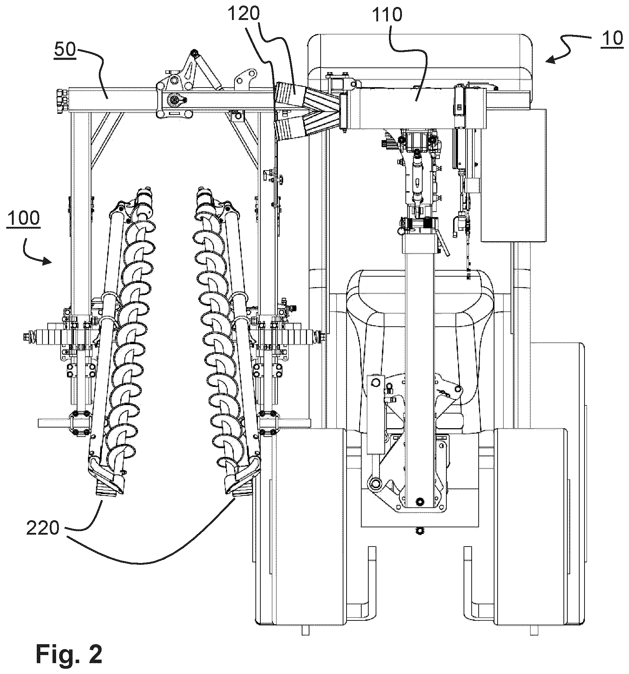

Figur 2 zeigt eine Frontalansicht des landwirtschaftlichen Fahrzeugs 10 mit der exemplarischen Ausgestaltung der erfindungsgemäßen Pflanzenbearbeitungsvorrichtung 100 aus Figur 1. Die Düsenanordnung 200 der erfindungsgemäßen Pflanzenbearbeitungsvorrichtung 100 ist hinter der weiteren Vorrichtung 300 zum Anheben bzw. Aufrichten von Pflanzenteilen nur zu erahnen, hier sind lediglich die Anschlussstutzen 220 erkennbar. Die übrigen Elemente entsprechen denen aus Figur 1.

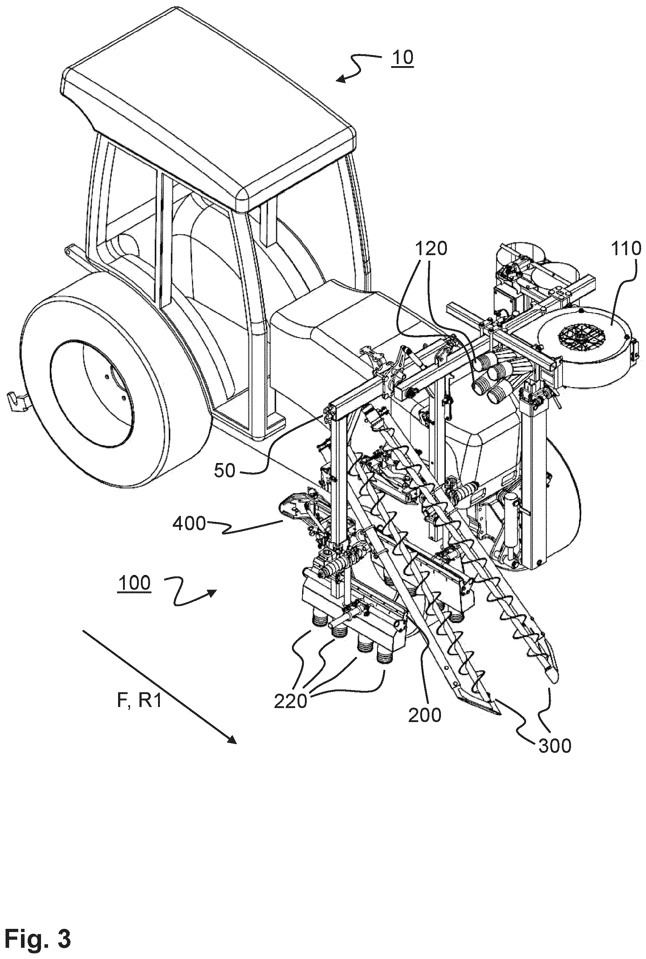

Figur 3 zeigt eine schräge Draufsicht auf das exemplarische landwirtschaftliche Fahrzeug aus Figur 1 mit der exemplarischen Ausgestaltung der erfindungsgemäßen Pflanzenbearbeitungsvorrichtung 100. Die Elemente entsprechen denen aus Figur 1 und sind dementsprechend gleich bezeichnet. Zusätzlich ist in der Figur eine Heftvorrichtung 400 dargestellt, mittels welcher die von der erfindungsgemäßen Vorrichtung aufgerichteten Pflanzenteile an einer den Pflanzen zugeordneten Tragstruktur befestigt werden. Wie in Figur 1 zeigt der mit F bezeichnete Pfeil die Fahrtrichtung während des Betriebs an.

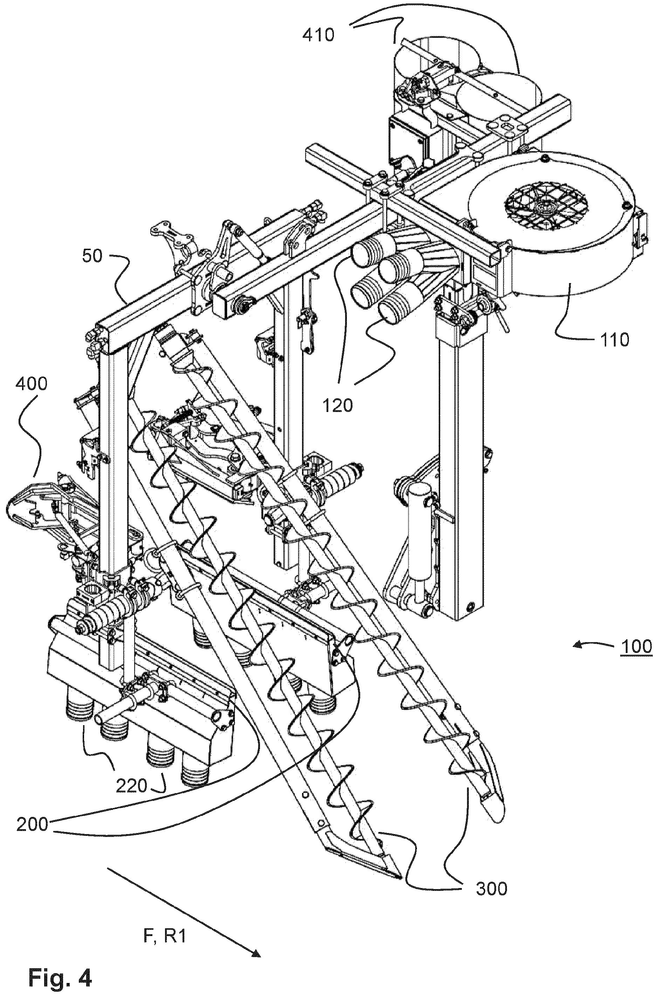

Figur 4 zeigt eine Draufsicht von schräg vorne auf eine Halterung 50 mit daran angeordneter exemplarischer Ausgestaltung der erfindungsgemäßen Pflanzenbearbeitungsvorrichtung 100. Wie zuvor in Figur 3 entsprechen die Elemente denen aus Figur 1 und sind dementsprechend gleich bezeichnet. Auch die Heftvorrichtung 400 ist in der Figur dargestellt, sowie Schur- bzw. Drahtbehälter 410, in denen die Schnur bzw. der Draht zur Befestigung der Pflanzenteile bevorratet sind. Wie in anderen Figuren auch sind mehrfach vorhandene Elemente u.U. nicht jeweils einzeln bezeichnet. Sie sind jedoch durch ihre jeweilige Form bzw. Darstellung leicht identifizierbar.

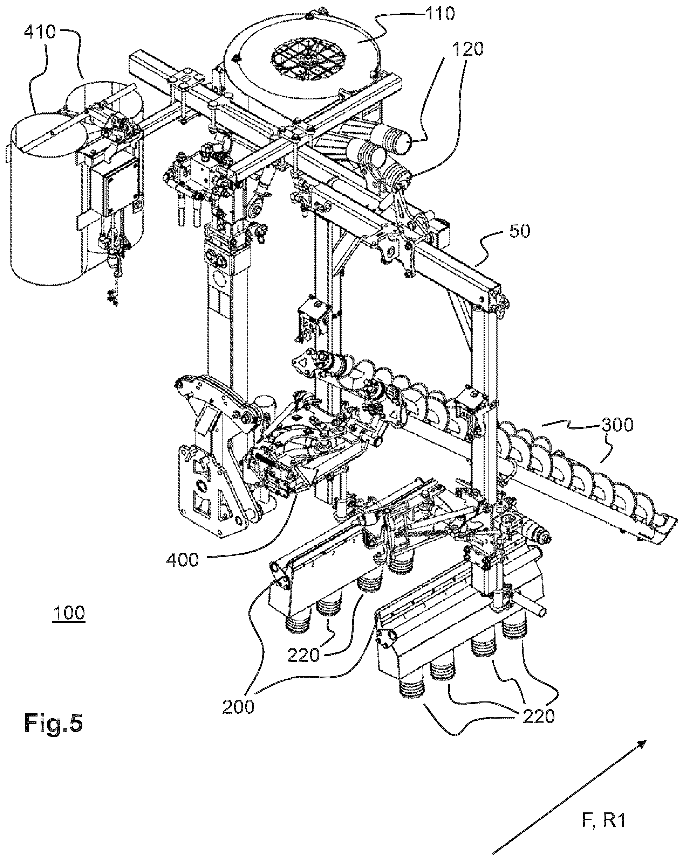

Figur 5 zeigt eine Draufsicht von schräg hinten auf die Halterung 50 mit daran angeordneter exemplarischer Ausgestaltung der erfindungsgemäßen Pflanzenbearbeitungsvorrichtung 100 aus Figur 4. Wie zuvor in Figur 3 und 4 entsprechen die Elemente denen aus Figur 1 und sind dementsprechend gleich bezeichnet. Auch die Heftvorrichtung 400 mit dem Schnur- bzw. Drahtbehälter 410 sind in der Figur dargestellt.

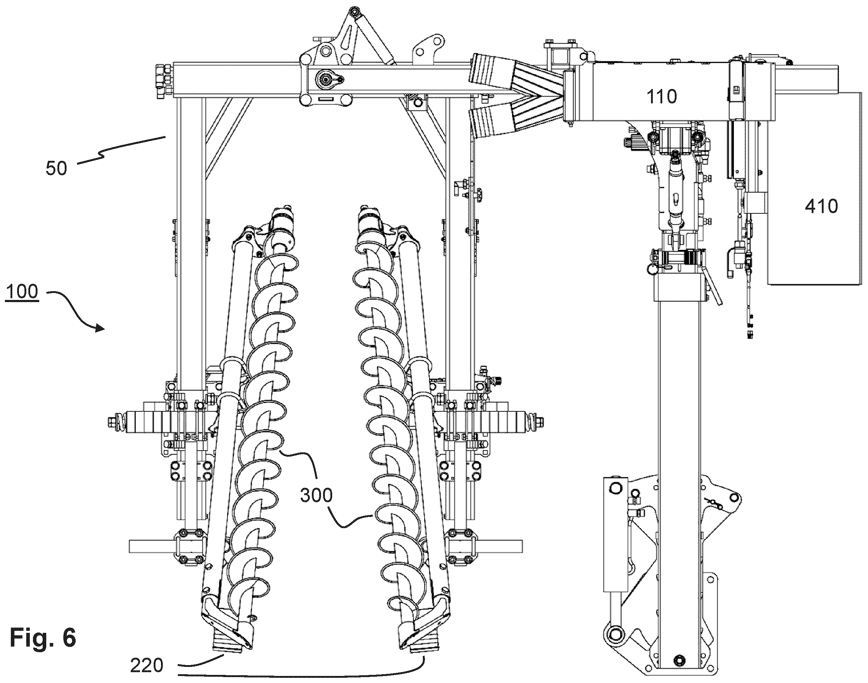

Figur 6 zeigt eine Vorderansicht der Halterung 50 mit daran angeordneter exemplarischer Ausgestaltung der erfindungsgemäßen Pflanzenbearbeitungsvorrichtung 100 aus Figur 4. Wie in Figur 2 ist die Düsenanordnung 200 der erfindungsgemäßen Pflanzenbearbeitungsvorrichtung 100 hinter der weiteren Vorrichtung 300 zum Anheben bzw. Aufrichten von Pflanzenteilen nur zu erahnen, hier sind lediglich die Anschlussstutzen 220 erkennbar.

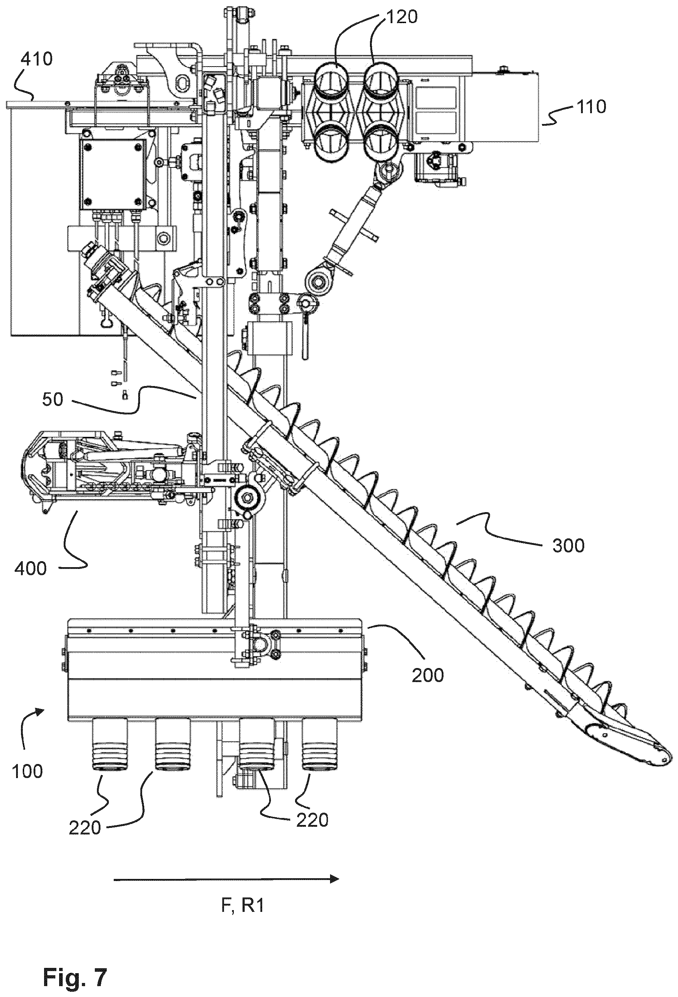

Figur 7 zeigt eine Seitenansicht der Halterung 50 mit daran angeordneter exemplarischer Ausgestaltung der erfindungsgemäßen Pflanzenbearbeitungsvorrichtung 100 aus Figur 4. In dieser Figur sind die Düsenanordnung 200 und die Heftvorrichtung 400 besonders gut erkennbar.

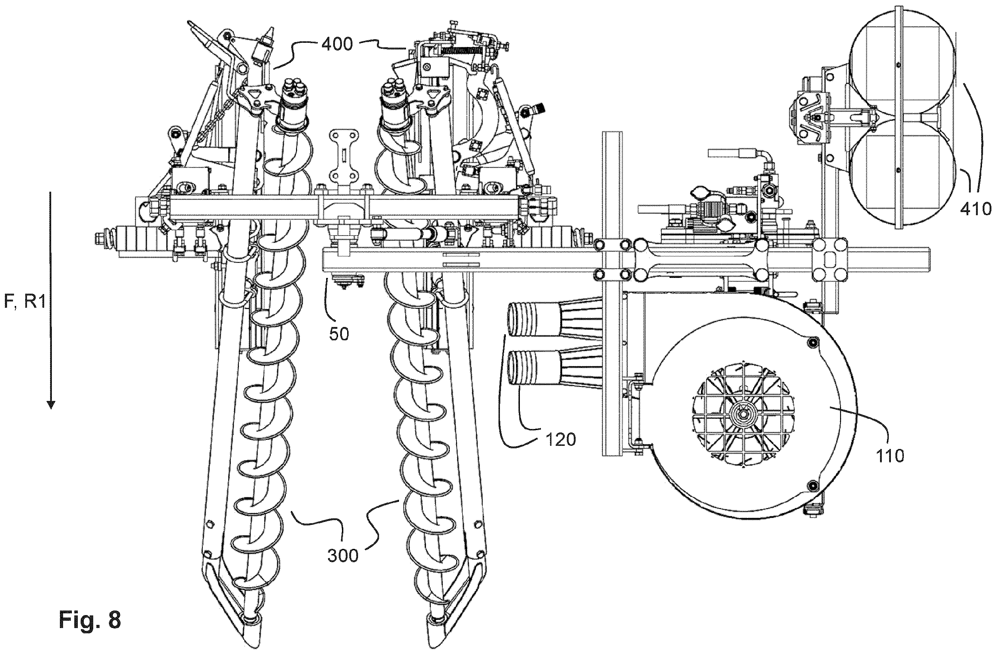

Figur 8 zeigt eine Draufsicht auf die Halterung 50 mit daran angeordneter exemplarischer Ausgestaltung der erfindungsgemäßen Pflanzenbearbeitungsvorrichtung 100 aus Figur 4 sowie einer Heftvorrichtung 400. In dieser Figur sind bis auf das Gebläse 110 vor allem die nicht unmittelbar zu der Erfindung gehörenden Anbauteile erkennbar.

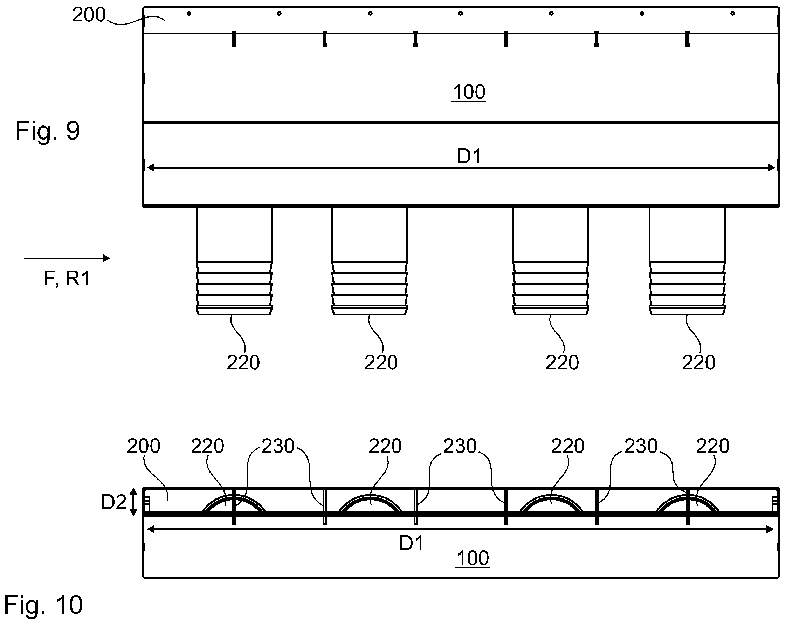

Figur 9 zeigt eine erste Seitenansicht einer beispielhaften Düsenanordnung 200 der erfindungsgemäßen Pflanzenbearbeitungsvorrichtung 100. Gut erkennbar sind hier die Anschlussstutzen 220 sowie de Erstreckung der Düsenanordnung 200 um die erste Distanz D1 in die erste Richtung R1. In der Zusammenschau mit Figur 10, in der eine Draufsicht auf eine beispielhafte erfindungsgemäße Düsenanordnung 200 der Pflanzenbearbeitungsvorrichtung 100 gezeigt ist, ist die Erstreckung der Düsenanordnung 200 um die zweite Distanz D2 in einer orthogonal zu der ersten Richtung R1 verlaufenden zweiten Richtung gut erkennbar. Außerdem sind in Figur 10 Einzelheiten der Düsenanordnung 200 gut erkennbar, die hier durch einen länglichen Austrittsschlitz der Länge D1 und der Breite D2 gebildet ist. Die Leitbleche 230 teilen den Austrittsschlitz in mehrere Düsen auf.

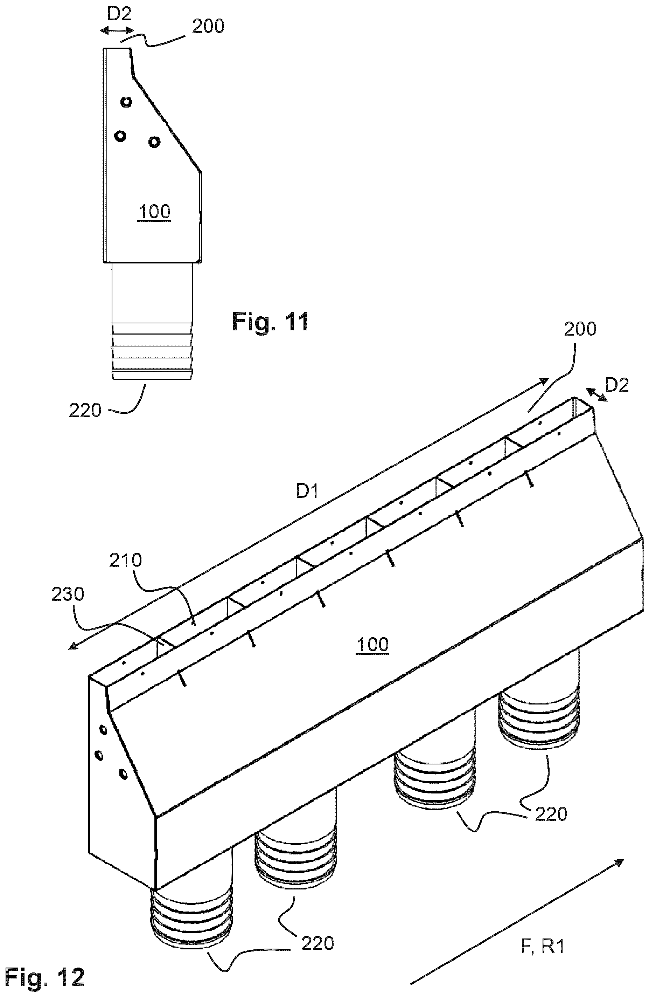

Figur 11 zeigt eine zweite Seitenansicht einer beispielhaften erfindungsgemäßen Pflanzenbearbeitungsvorrichtung 100, und Figur 12 zeigt eine isometrische Ansicht einer beispielhaften Düsenanordnung 200 der erfindungsgemäßen Pflanzenbearbeitungsvorrichtung 100. Die Figuren 11 und 12 sind im Lichte der vorstehenden Beschreibung der Figuren 9 und 12 selbst erklärend.

### LISTE DER BEZUGSZEICHEN (TEIL DER BESCHREIBUNG)

- 10: landwirtschaftliches Fahrzeug
- 50: Halterung
- 100: Pflanzenbearbeitungsvorrichtung
- 110: Gebläse
- 120: Anschlussstutzen
- 200: Düsenanordnung
- 210: Düse
- 220: Anschlussstutzen
- 230: Leitblech
- 300: weitere Vorrichtung
- 400: Heftvorrichtung
- 410: Schnur-/Drahtbehälter
- D1: erste Distanz
- D2: zweite Distanz
- F: Fahrtrichtung
- R1: erste Richtung

## Patentansprüche

1. Pflanzenbearbeitungsvorrichtung (100) mit einem Gebläse (110) und einer eine oder mehreren fluidisch mit dem Gebläse (110) verbundene Düsen (210) umfassenden Düsenanordnung (200), welche an einer mit einem landwirtschaftlichen Fahrzeug (10) verbindbaren Halterung (50) so angeordnet ist, dass ein von der Düsenanordnung (200) ausgehender Luftstrom in Bodennähe und/oder an einer der Pflanzenbearbeitungsvorrichtung (100) zugeordneten weiteren Bearbeitungsvorrichtung (400) mit einer überwiegenden, vertikalen Komponente austritt, und wobei der von der Düsenanordnung (200) austretende Luftstrom sich in einer ersten Richtung (R1) über eine erste Distanz (D1) erstreckt und in einer zweiten, orthogonal zu der ersten Richtung (R1) verlaufenden zweiten Richtung über eine zweite Distanz (D2) erstreckt, wobei die erste Distanz (D1) nennenswert größer ist als die zweite Distanz (D2).

2. Pflanzenbearbeitungsvorrichtung (100) nach Anspruch 1, wobei die Düsenanordnung (200) mittels einer gelenkigen Verbindung mit der Halterung (50) verbunden ist, wobei die Düsenanordnung (200) durch die Wirkung der Schwerkraft oder durch einen auf die gelenkige Verbindung wirkenden Aktuator so ausrichtbar ist, dass der Luftstrom stets mit der überwiegenden, vertikalen Komponente austritt.

3. Pflanzenbearbeitungsvorrichtung (100) nach Anspruch 1 oder 2, wobei der Luftaustritt der Düsenanordnung (200) einen bogenförmigen, vom bodenseitigen Ende der Düsenanordnung (200) ansteigenden Verlauf aufweist.

4. Pflanzenbearbeitungsvorrichtung (100) nach einem der vorhergehenden Ansprüche, wobei die Düsenanordnung (200) und das Gebläse (110) an der mit dem landwirtschaftlichen Fahrzeug verbindbaren Halterung (50) angeordnet sind.

5. Pflanzenbearbeitungsvorrichtung (100) nach einem der vorhergehenden Ansprüche, außerdem umfassend eine weitere Vorrichtung (300) zum Anheben bzw. Aufrichten von Pflanzenteilen mittels direktem mechanischen Kontakt zwischen der weiteren Vorrichtung und der Pflanze.

6. Pflanzenbearbeitungsvorrichtung (100) nach einem der vorhergehenden Ansprüche, außerdem umfassend eine Vorrichtung (400) zur Anbindung bzw. Verbindung von durch den Luftstrom aufgerichteten Pflanzenteilen mit einer den Pflanzen zugeordneten Tragstruktur.

7. Pflanzenbearbeitungsvorrichtung (100) nach einem der vorhergehenden Ansprüche, außerdem umfassend eine Vorrichtung zur Entfernung von Feuchtigkeit, Laub und/oder anderen Pflanzenteilen.

8. Landwirtschaftliches Fahrzeug (10) mit einem Fahrgestell und einer Pflanzenbearbeitungsvorrichtung (100) nach einem oder mehreren der vorhergehenden Ansprüche.
